# EUROPEAN PATENT APPLICATION

(11) **EP 2 374 672 A1**
(43) Date of publication of application: **12.10.2011**
(21) Application number: 11160352.8
(22) Date of filing: 30.03.2011
(51) Int. Cl.: B60T 1/04, B60T 3/00, B60T 7/04, B60T 7/10

(54) **Parking brake for wheels, in particular for wheels of multi-purpose trolleys**

(30) Priority: 12.04.2010 IT VE20100015
(71) Applicant: Euromop S.p.A., 35013 Cittadella (PD) (IT)
(72) Inventor: Cervellin, Maicol, 35013, Cittadella (IT)
(74) Representative: Piovesana, Paolo

(57) **Abstract**

A parking brake for wheels, in particular for wheels of multi-purpose trolleys, said brake consisting of a rocker lever (2) pivoted on the hub (4) of the wheel (6), said hub being supported by a fork-shaped foot (8), characterised in that an arm (12) of the rocker lever (2) is provided with at least one wedge-shaped flange (34) removably insertable between the sidepieces (24) of the foot (8) and the lateral band (42) of the wheel (6).

## Description

The present invention relates to a parking brake for wheels, in particular for wheels of multi-purpose trolleys.

Multi-purpose trolleys used for room cleaning and sanitizing are known, consisting of a frame with several shelves, supports etc. supported by several wheels, one of which is provided with a parking brake.

The brake generally consists of a rocker lever, pivoted about the wheel hub axis, with one arm forming the member by which the rocker lever is moved by the user's foot, and the other arm presenting a portion parallel to the hub axis and acting by friction against the wheel tread.

A drawback of this brake is that that portion interacting with the tread wears away the tread surface with time so that an annoying noisiness arises during the trolley movement.

The object of the invention is to eliminate this drawback by providing a parking brake enabling the wheels to be reliably locked.

This object is attained according to the invention by a parking brake for wheels, in particular for wheels of multi-purpose trolleys, as described in claim 1.

A preferred embodiment of the present invention is clarified hereinafter with reference to the accompanying drawings, in which:

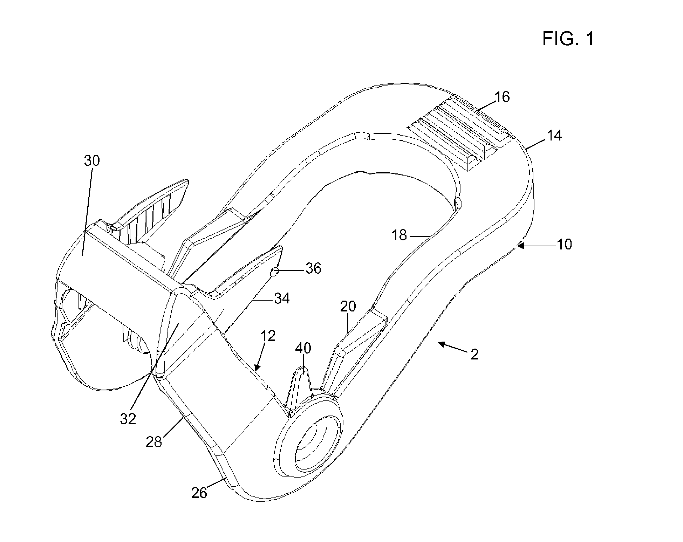

- Figure 1: is a perspective view of the parking brake according to the invention,

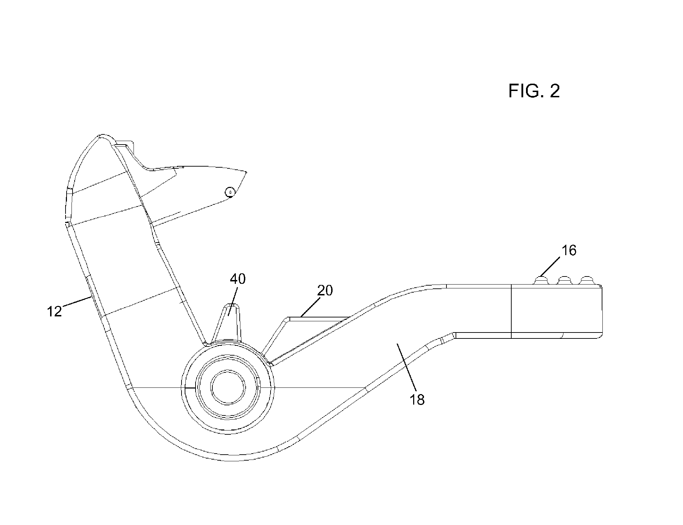

- Figure 2: is a side view thereof,

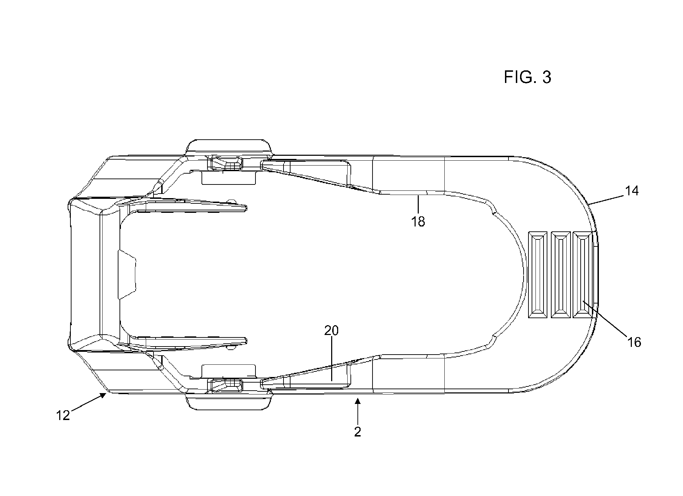

- Figure 3: is a plan view thereof,
- Figure 4: is a side view thereof shown mounted on a wheel in free wheel configuration,

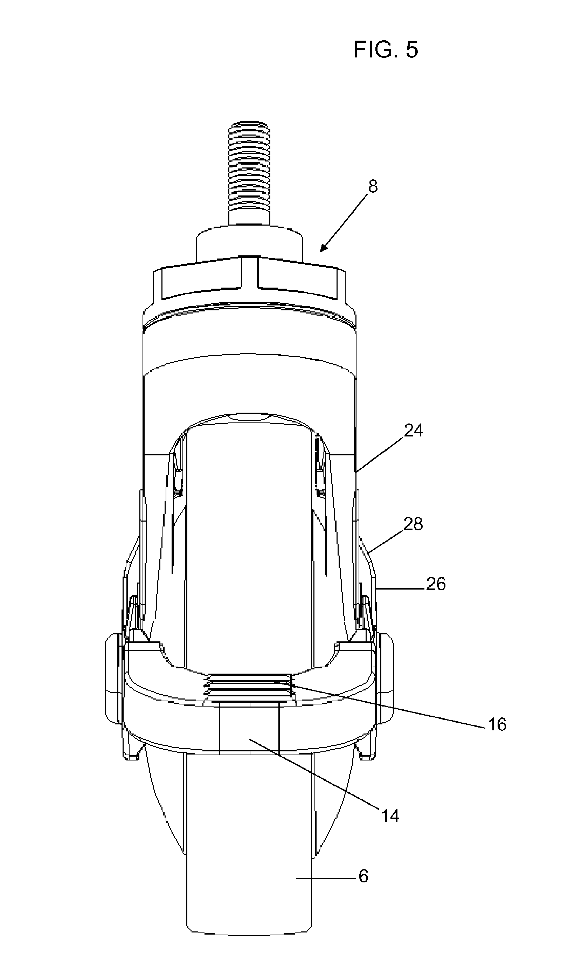

- Figure 5: is a front view thereof, and

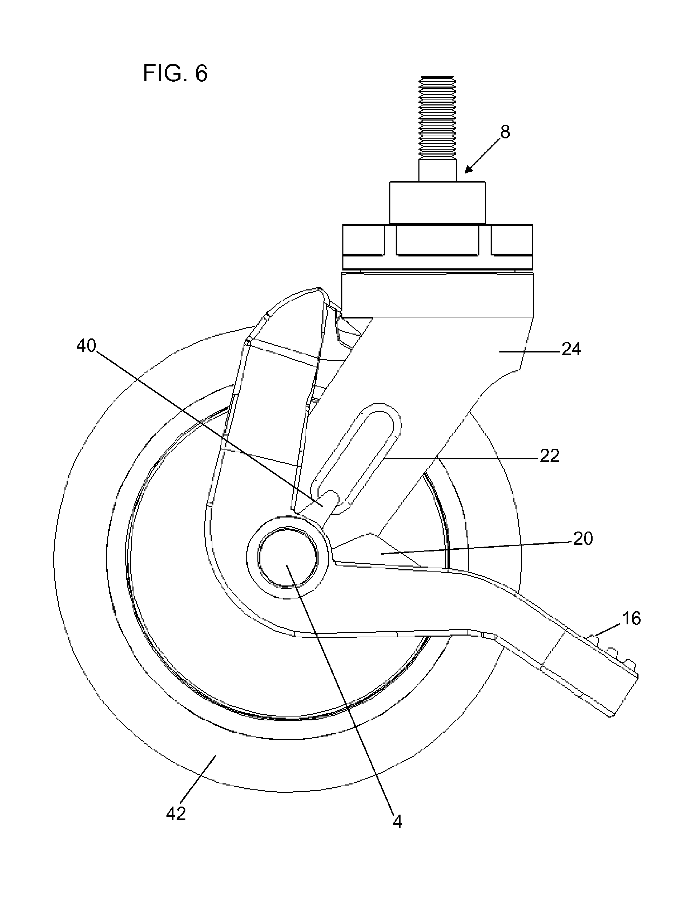

- Figure 6: shows it in the same condition as Figure 4, but with the wheel in the locked state.

As can be seen from the figures, the parking brake of the invention comprises substantially a rocker lever 2 pivoted on the hub 4 of the wheel 6 of a foot 8 of a multi-purpose trolley (not shown in the drawings).

Both the arms 10 and 12 of the rocker lever are substantially of U-shape. In particular, the central portion 14 of the arm 10 comprises ribs 16, while its sidepieces 18 comprise two appendices 20 which, during rotation of the rocker lever, interact with a slotted annular rib 22 provided on the fork 24 supporting the hub 4 of the wheel 6.

The arm 12, which is disposed at an angle to the arm 10, has its initial parallel portions 26 extending into two mutually converging angular portions 28 which at their ends form a fork 30 with the distance between its sidepieces 32 slightly greater than the width of the wheel 6.

The sidepieces 32 extend into two flanges 34, of decreasing thickness towards their free end, which comprise a tooth 36 on that surface thereof which faces outwards.

Finally, the rocker lever is provided, on the crown 38 pivoted about the hub 4, with a further flange 40 also interacting with the annular rib 22.

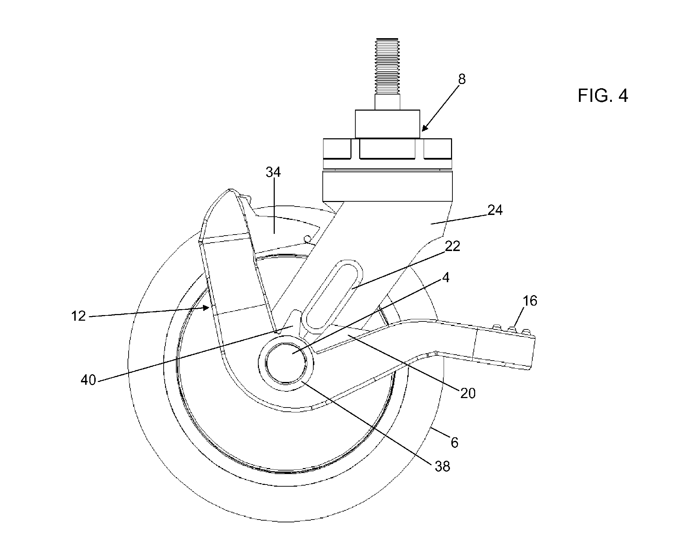

The parking brake of the invention operates as follows:
When the trolley is moving, the rocker lever 2 is maintained in the stable configuration illustrated in Figure 4, as any rotation thereof is prevented by the counteracting effect of the ribs 22 against the flanges 20 and 40.

In this configuration the flanges 34 are not in contact with the lateral band 42 of the wheel.

When the trolley is to be locked, the user presses on the ribs 16 of the arm 10 with a foot, to cause the rocker lever to rotate.

As a result of this rotation the arm 12 rotates as the counteracting effect of the ribs 22 on the outwardly elastically yielding flange 40 has been overcome, and the flanges 34 become inserted into the space defined by the fork 24 and the lateral band 42 of the wheel, they being pressed against this band by virtue of their wedge shape, to cause clamping of the wheel.

This configuration is maintained stable by the friction offered by the rib 22 against the flange 40 and by the engagement of the teeth 36 with the fork 24.

When the brake is to be released, the portion 14 has merely to be lifted upwards to rotate the rocker lever and disengage the flanges from the wheel.

## Claims

1. A parking brake for wheels, in particular for wheels of multi-purpose trolleys, said brake consisting of a rocker lever (2) pivoted on the hub (4) of the wheel (6), said hub being supported by a fork-shaped foot (8), **characterised in that** an arm (12) of the rocker lever (2) is provided with at least one wedge-shaped flange (34) removably insertable between the sidepieces (24) of the foot (8) and the lateral band (42) of the wheel (6).

2. A parking brake as claimed in claim 1, **characterised in that** the arms (10, 12) of the rocker lever (2) are substantially of U-shape.

3. A brake as claimed in claim 1, **characterised in that** an arm (10) of the rocker lever (2) has a central portion comprising ribs (16).

4. A brake as claimed in claim 3, **characterised in that** the sidepieces of the arm (10) of the rocker lever (2) comprise appendices (20) which, during rotation of the rocker lever, interact with a rib (22) provided on the fork of the support foot (8) for the hub of the wheel (6).

5. A brake as claimed in claim 1, **characterised in that** the sidepieces of the arm (12) of the rocker lever (2) extend into two flanges (34) of decreasing thickness towards their free end.

6. A brake as claimed in claim 5, **characterised in that** the two flanges (34) comprise a tooth (36) on that surface thereof facing outwards.

7. A brake as claimed in claim 1, **characterised in that** the rocker lever is provided, on the crown (38) pivoted about the hub (4), with a further flange (40) interacting with the rib (22).
